(19) **Europäisches Patentamt**

**European Patent Office**

**Office européen des brevets**

(11) Veröffentlichungsnummer: **0 237 009 B1**

# (12) EUROPÄISCHE PATENTSCHRIFT

(45) Veröffentlichungstag der Patentschrift: **09.12.92**

(51) Int. Cl.5: **H04B 7/195**

(21) Anmeldenummer: **87103362.7**

(22) Anmeldetag: **09.03.87**

(54) **Fernmeldesatellitensystem auf quasistationären Bahnen.**

(30) Priorität: **11.03.86 DE 3607931**

(43) Veröffentlichungstag der Anmeldung:
**16.09.87 Patentblatt 87/38**

(45) Bekanntmachung des Hinweises auf die
Patenterteilung:
**09.12.92 Patentblatt 92/50**

(84) Benannte Vertragsstaaten:
**AT BE CH DE FR GB IT LI NL SE**

(56) Entgegenhaltungen:
**EP-A- 0 059 454**

**NTZARCHIV, Band 5, Nr. 12, Dezember 1983,
Seiten 327-335; P. DONDL: "LOOPUS erschliesst dem satellitenfunk eine neue dimension"**

(73) Patentinhaber: **SIEMENS AKTIENGESELL-
SCHAFT**
**Wittelsbacherplatz 2**
**W-8000 München 2(DE)**

Patentinhaber: **ANT Nachrichtentechnik GmbH**
**Gerberstrasse 33**
**W-7150 Backnang(DE)**

Patentinhaber: **Messerschmitt-Bölkow-Blohm
Gesellschaft mit beschränkter Haftung**
**Robert-Koch-Strasse**
**W-8012 Ottobrunn(DE)**

(72) Erfinder: **Dondl, Peter, Dipl.-Ing.**
**An der Fuchsenhütte 48**
**W-6101 Rossdorf(DE)**

(74) Vertreter: **Fuchs, Franz-Josef, Dr.-Ing. et al**
**Postfach 22 13 17**
**W-8000 München 22(DE)**

**Beschreibung**

Die Erfindung betrifft ein Fernmeldesatellitensystem auf quasistationären Bahnen mit mehreren in zyklischer Folge am nahezu gleichen Himmelspunkt erscheinenden und im Funkbereich einander ablösenden Erdsatelliten mit elliptischer Umlaufbahn.

Bei den Fernmeldesatelliten auf quasistationären Bahnen, deren Bodenspuren theoretisch deckungsgleich sind und eine oder mehrere geschlossene Schleifen aufweisen, handelt es sich um ein System von Satelliten, bei dem durch die zeitliche Staffelung und einer Satellitenumschaltestrategie erreicht wird, daß geostationäre Positionsschleifen entstehen, die ununterbrochen von Satelliten wechselnder Identität durchflogen werden.

Fernmeldesatellitensysteme mit geostationären Positionsschleifen, bei denen sich die beiden Bahnäste der Schleifen treffen und Satellitenkollisionen durch die Bahnungenauigkeiten vermieden werden (Wahrscheinlichkeit ca. $10^{-9}$ je Begegnung)., sind bekannt aus Patentanmeldung DE-A-31 45 207.8 und aus einer Veröffentlichung "Loopus erschließt dem Satellitenfunk eine neue Dimension", ntz Archiv Heft 12/1983.

Bei Anwendung eines digitalen Übertragungsverfahrens über die Satellitenfunkstrecke können im Zeitpunkt der Satellitenumschaltung einige Bits im gesendeten Funksignal verloren gehen, wenn dies nicht durch geeignete Maßnahmen verhindert wird. Eine Möglichkeit besteht darin, sicherzustellen, daß die Gesamtfunkstrecke nach der Umschaltung etwas länger ist als vorher. Dadurch wird der letzte Signalschwanz der Übertragung über den die Positionsschleife verlassenden Satelliten als Signalkopf der Übertragung über den in die Schleife einfliegenden Satelliten wiederholt. Diese in der Empfangserdfunkstelle doppelt empfangene Bitsequenz läßt sich zur Synchronisierung und nahtlosen Aneinanderreihung der übertragenen Information verwenden, um unterbrechungsfreien Signalfluß über die Schnittstelle zum terrestrischen Fernmeldenetz zu gewährleisten.

Digitale Übertragungsverfahren, die nach dem vorherbeschriebenen Prinzip arbeiten, sind bekannt aus Patentanmeldung DE-A-34 37 317.9.

Genaue Studien haben jedoch ergeben, daß bei der bekannten Bahngeometrie und -konstellation dieses digitale Übertragungsverfahren

- sich entweder nicht dauernd bei allen Umschaltefällen durchführen läßt, oder
- die Übertragungskapazität nicht optimal genutzt werden kann.

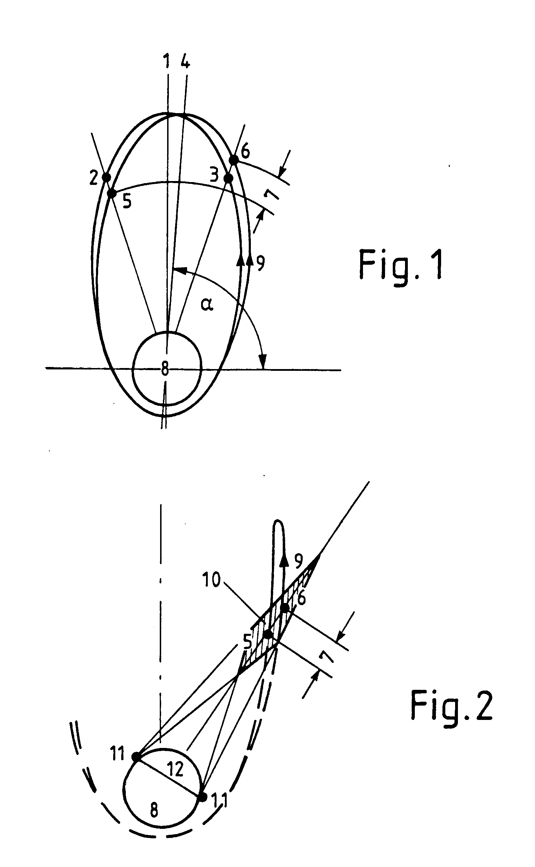

Will man das beschriebene Übertragungsverfahren über geostationäre Positionsschleifen sicher mit optimaler Übertragungskapazität betreiben, muß die Geometrie der Funkstrecken beachtet werden. Die beteiligten nachgeführten Erdfunkstellen verfolgen den aktiven Satelliten. Das Schnittvolumen aller Antennenkeulen dieser Erdfunkstellen besteht aus einem Doppelkegel um den aktiven Satelliten, dessen eine Spitze Richtung Erde, die andere entgegengesetzt weist, wie später anhand der Fig. 2 erläutert werden wird. Um funktechnisch unterbrechungsfrei zu arbeiten ist es erforderlich, daß der Folgesatellit die Fernmeldefunktion innerhalb des Doppelkegels übernimmt.

Bei der bekannten Bahnkonstellation, wo sich die beiden Satelliten theoretisch treffen, sind die beiden Forderungen
- 'Umschaltung im Doppelkegel' und
- 'Folgesatellit weiter entfernt als aktiver Satellit'

nicht bei allen Umschaltungen und bei optimal ausgelegter Funkstrecke möglich.

Zu einem nicht unerheblichen Teil der Fälle wird entweder der Folgesatellit außerhalb des Doppelkegels umzuschalten sein (Gewinneinbruch) oder die Signalwiederholung durch Verlängerung der Funkstrecke tritt nicht ein (Störung der Unterbrechungsfreiheit).

Diese Schwierigkeiten werden erfindungsgemäß durch eine leichte Veränderung der Umlaufbahnen der einander ablösenden Satelliten gemäß dem Kennzeichen des Patentanspruchs 1 behoben. Eine vorteilhafte Ausgestaltung der Erfindung ist den Patentansprüchen 2 bis 5 zu entnehmen.

Da bei der erfindungsgemäßen Bahnkonstellation das Apogäum der Bahnellipsen nicht im nördlichsten/südlichsten Bahnpunkt liegt, sondern gegen die Flugrichtung des jeweiligen Satelliten im seiner Bahnebene ausreichend verschoben ist, verläuft die Bahn des übernehmenden Satelliten einschließlich der Bahntoleranzen hinter dem aktiven.Satelliten durch den Doppelkegel. Somit ist das vorstehend kurz beschriebene Digital-Übertragungsverfahren störungsfrei anwendbar.

Die Vorteile der Erfindung liegen also darin, daß durch die Verdrehung der Bahnellipsen in ihren Ebenen erreicht wird, daß im Umschaltezeitpunkt der übernehmende Satellit nahezu ideal innerhalb der Erdfunkstellen-Antennenkeulen liegt, die auf den übergebenden Satelliten gerichtet sind, obwohl sich die Satelliten in ihrer Entfernung zur Erde wesentlich unterscheiden.

Der Vorteil der Erfindung besteht weiter darin, daß Sendeerdfunkstellen genauso wie in einem herkömmlichen geostationären System arbeiten können. Die Empfangsfunkstellen erhalten die Information über die Satellitenumschaltung durch den Dopplersprung des ankommenden Funksignals. Daher sind die Kommunikationserdfunkstellen autonom betreibbar. Sie arbeiten unabhängig von der Satellitenfernüberwachung und der Umschaltestrategie.

Im folgenden wird die Erfindung anhand von 4 Figuren näher erläutert. Es zeigen:

Fig. 1     das Prinzip der Erfindung

Fig. 2     die Ausbildung der resultierenden Antennenkeulen der Erdefunkstellen als Doppelkegel

Fig. 3     ein Ausführungsbeispiel der Erfindung in perspektivischer Darstellung

Fig. 4     ein Ausschnitt aus Fig. 3 unter Berücksichtigung der Bahntoleranzen.

In Fig. 1 ist die erfindungsgemäße Verschiebung der Bahnellipse dargestellt. In der bekannten Lage der Bahnellipse mit der Apsidenlinie 1 ist die Entfernung zwischen Erde 8 und dem Bahnpunkt des abzuschaltenden Satelliten 2 und die zwischen der Erde und dem einzuschaltenden Satelliten 3 gleich. Durch Drehen der Bahnellipse gegen die Satellitenflugrichtung 9 zur Stellung mit der neuen Apsidenlinie 4 verschiebt sich Punkt 2 auf Punkt 5 und Punkt 3 auf 6. Somit ist im Umschaltezeitpunkt ein Abstandsunterschied 7 vorhanden.

Die Drehung der Bahnellipse beträgt 90°-$\alpha$, wobei $\alpha$ den Winkel kennzeichnet, dessen Ursprung im Erdmittelpunkt liegt und dessen einer Schenkel durch den aufsteigenden Knoten in der Äquatorialebene und dessen anderer Schenkel durch das Apogäum der Bahnellipse verläuft.

In Fig. 2 ist die Erde 8 mit zwei am Ausleuchterand plazierten Erdfunkstellen 11 dargestellt. Die Hauptkeulen dieser Erdfunkstellen und weiterer entlang der Kontur 12 aufgestellten Erdfunkstellen umschließen ein Schnittvolumen 10 in Doppelkegelform. Im Wechselspiel mit der Erddrehung wird aus dem elliptischen Bahnbogen aus Fig.1 von 6 nach 5 scheinbar eine Schleife. Sie erscheint aus der Sicht der beteiligten Erdfunkstellen geschlossen. Im Profil jedoch, wie in Fig. 2, ist sie am Umschaltort offen, so daß die sich gegenseitig ablösenden Satelliten den Abstand 7 haben.

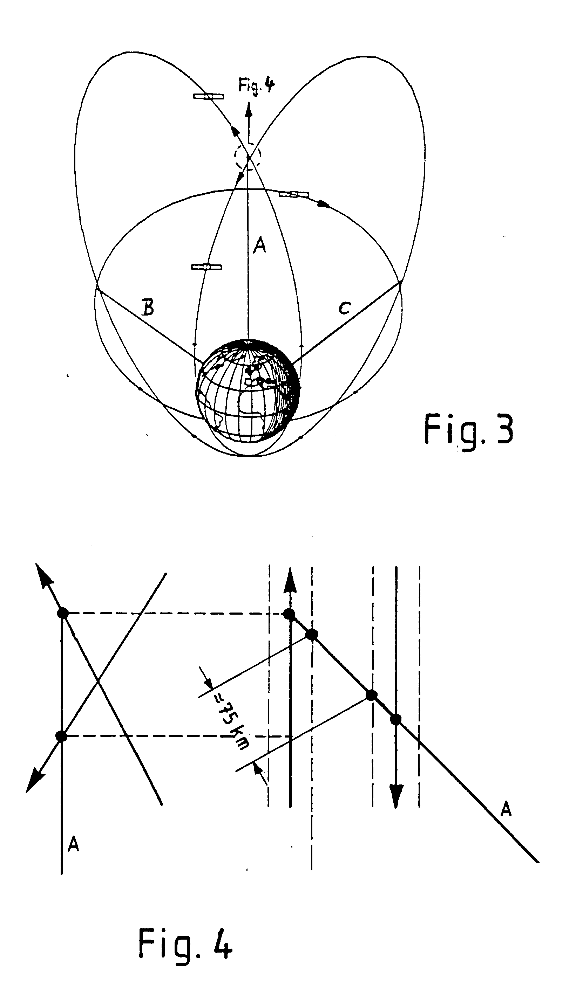

Ein Ausführungsbeispiel, wie in Fig. 3 dargestellt, ist ein Satellitensystem mit drei Satelliten auf drei elliptischen Bahnen, deren aufsteigende Knoten jeweils 120° entfernt sind, mit einer Umlaufzeit von etwa zwölf Stunden. Die Inklination beträgt etwa 63,4°. Der Winkel "aufsteigender Knoten, Erdmittelpunkt, Apogäum" beträgt 89,8°. Dieser Winkel ist als Winkel in Figur 1 wegen der besseren Erkennbarkeit seiner Abweichung von der Senkrechten etwas kleiner dargestellt. Die Abweichung von der Senkrechten beträgt tatsächlich lediglich 0,2° = 12 Bogenminuten. Das Apogäum wird also vom jeweiligen Satelliten kurz vor dem nördlichsten Punkt seiner Bahn durchflogen.

Die drei Satelliten überfliegen die gleiche Subsatellitenspur in etwa achtstündigem Zeitabstand. Im A, B und C liegen jeweils Erdmittelpunkt, der Übergabepunkt und der Übernahmepunkt im Orbit auf einer Geraden. Durch das Wechselspiel mit der Erddrehung enthält die Subsatellitenspur zwei Schleifen. Die Exzentrizität der Bahnen ist mit dem Wert von rund 0,713 so gewählt, daß die Schleifendurchlaufzeit 2/3 der Umlaufzeit, also etwa acht Stunden beträgt. Aus der Sicht von Erdfunkstellen (genau vom Kreuzungs-oder Berührungspunkt jeder Schleife der Subsatellitenspur aus gesehen ) treffen sich im Acht-Stunden-Rhytmus jeweils ein absteigender und ein aufsteigender Satellit am gleichen Himmelspunkt, wo die Fernmeldefunktion umgeschaltet wird.

Fig. 4 links zeigt im vergrößerten Maßstab den mittleren Übergabepunkt von Fig. 3. Wegen der Perspektive ist der Strahl A verkürzt. Fig. 4 rechts zeigt dagegen Strahl A in seiner wahren maßstäblichen Größe.

Durch die Verschiebung des Apogäums aus dem nördlichsten Punkt gegen die Flugrichtung, ist die Flughöhe des übernehmenden Satelliten etwa 209 km größer als die des übergebenden Satelliten,wie in Fig. 4 rechts dargestellt.

Die gestrichelt dargestellten Toleranzschläuche für Satellitenbahnen in solchen Systemen haben realistisch (Korrekturtreibstofföknomie) etwa 45 km Radius. Da die Erdfunkstellenstrahlrichtungen schräg auf die Bahnen treffen, bleibt letztlich eine garantierte radiale Abstandsdifferenz von etwa 75 km.

Auf- und abwärts verlängert sich damit die Satellitenfunkstrecke um 150 km. Das entspricht einer Verlängerung der Ausbreitungszeit um 0,5 ms. Bei der Übertragung eines Standardkanals von 2,048 Mbit/s entspricht dies einer Wiederholung von 1024 Bit.

Nach Abzug einiger Bit, die wegen Ungenauigkeiten bei der Bahnverfolgung und bei der Umschaltung verloren gehen, bleiben immer noch 900 bis 1000 Bit zur Synchronisierung der Datenströme, wie anderswo beschrieben.

**Patentansprüche**

1. Fernmeldesatellitensystem auf quasistionären Bahnen mit mehreren in zyklischer Folge am nahezu gleichen Himmelspunkt erscheinenden und im Funkbetrieb einander ablösenden Erdsatelliten (2, 3, 5, 6) mit elliptischer Umlaufbahn, bei dem die sich durch unterschiedliche Entfernung der jeweils ein- und auszuschaltenden Satelliten zu den Erdfunkstellen (11) ergebende zusätzliche Laufzeit zur Speicherung des Signalflusses um den Umschaltezeitpunkt ausgenutzt wird,**dadurch gekennzeichnet,** daß hierzu das Apogäum der Bahnellipse soweit vom nördlichsten bzw. südlichsten Bahnpunkt gegen die Flugrichtung (9) des jeweiligen Satelliten verschoben ist, daß sich eine hinreichende Signalwiederholung der zu übertragenden Bits um den Umschaltezeitpunkt ergibt.

2. Fernmeldesatellitensystem nach Anspruch 1; dadurch gekennzeichnet, daß drei Satelliten auf Ellipsenbahnen mit einer Exzentrizität von 0.713 und einer Umlaufzeit von 12 Stunden umlaufen.

3. Fernmeldesatellitensystem nach Anspruch 2, dadurch gekennzeichnet, daß die Verschiebung des Apogäums gegen den nördlichsten Bahnpunkt 0,2° und damit der Winkel "Aufsteigender Knoten, Erdmittelpunkt, Apogäum" 89,8° beträgt.

4. Fernmeldesatellitensystem nach Anspruch 2, dadurch gekennzeichnet, daß die Verschiebung des Apogäums gegen den südlichsten Bahnpunkt 0,2° und damit der Winkel "Absteigender Knoten, Erdmittelpunkt, Apogäum" 89,8° beträgt.

5. Fernmeldesatellitensystem nach Anspruch 3 oder 4, dadurch gekennzeichnet, daß mit der Verschiebung des Apogäum um 0,2° unter Berücksichtigung der maximal zulässigen Bahntoleranzen und der schräg auf die Satellitenbahnen auftreffenden Strahlrichtung der Erdfunkstellen (11) eine radiale Abstandsdifferenz der einander ablösenden Satelliten zu den Erdfunkstellen von 75 km und damit eine Verlängerung der Ausbreitungszeit für die Hin- und Rückrichtung von 0,5 ms garantiert ist.

## Claims

1. Telecommunications satellite system in quasi-stationary orbits having a plurality of earth satellites (2, 3, 5, 6) having an elliptical orbit appearing in cyclical succession at virtually the same celestial point and relieving one another in radio traffic operation, in which the additional transit time produced by different distances from the ground stations (11) of the respective satellites that are to be switched on and off is utilised to store the signal flow about the switch over time, characterised in that to this end the apogee of the orbital ellipse is shifted to such a degree from the northernmost or southernmost orbital point against the direction of flight (9) of the respective satellite that an adequate signal repetition of the bits to be transmitted occurs about the switch over time.

2. Telecommunications satellite system according to Claim 1, characterised in that three satellites revolve in elliptical orbits having an eccentricity of 0.713 and an orbital time of 12 hours.

3. Telecommunications satellite system according to Claim 2, characterised in that the shift in the apogee against the northernmost orbital point is 0.2°, and thus the angle of "ascending node, centre of the earth, apogee" is 89.8°.

4. Telecommunications satellite system according to Claim 2, characterised in that the shift in the apogee against the southernmost orbital point is 0.2°, and thus the angle of "ascending node, centre of the earth, apogee" is 89.8°.

5. Telecommunications satellite system according to Claim 3 or 4, characterised in that taking account of the maximum permissible orbital tolerances and of the beam direction of the ground stations (11), which obliquely impinges on the satellite orbits, the shift in the apogee by 0.2° guarantees a radial spacing difference of the satellites relieving one another of 75 km relative to the ground station, and thus a lengthening of the propagation time for the forward and return directions of 0.5 ms.

## Revendications

1. Système de télécommunication par satellite sur des orbites quasi-stationnaires, comportant plusieurs satellites terrestres (2,3,5,6) qui apparaissent selon une suite cyclique presque au même point du ciel et se relaient pour le fonctionnement de transmission hertzienne et possèdent une orbite elliptique, et dans lequel le temps de propagation supplémentaire qui est provoqué par des distances différentes entre les satellites devant être respectivement activés et désactivés et les stations hertziennes terrestres (11), qui est utilisée pour mémoriser le flux de signaux autour de l'instant de commutation, caractérisé par le fait qu'à cet effet l'apogée de l'orbite elliptique est décalée par rapport au point le plus au nord ou le point le plus au sud de la trajectoire par rapport à la direction de vol (9) du satellite respectif au point que l'on obtient une répétition suffisante des signaux des bits devant être transmis, autour de l'instant de commutation.

2. Système de télécommunication par satellite suivant la revendication 1, caractérisé par le fait que trois satellites circulent sur des orbites elliptiques présentant une excentricité égale à 0,713 et avec une durée de révolution de 12 heures.

3. Système de télécommunication par satellite suivant la revendication 2, caractérisé par le fait que le décalage de l'apogée par rapport au point le plus au nord de la trajectoire est égal à 0,2° et que par conséquent l'angle "noeud ascendant, centre de la terre, apogée" est égal à 89,8°.

4. Système de télécommunication par satellite suivant la revendication 2, caractérisé par le fait que le déplacement de l'apogée en direction du point le plus au sud de l'orbite est égal à 0,2° et que par conséquent l'angle "noeud descendant, centre de la terre, apogée" est égal à 89,8°.

5. Système de télécommunication par satellite suivant la revendication 3 ou 4, caractérisé par le fait que le décalage de l'apogée de 0,2°, compte tenu des tolérances maximales admissibles sur l'orbite et de la direction d'émission, qui rencontre obliquement les trajectoires des satellites, des stations hertziennes terrestres (11), garantit une différence radiale de distance des satellites, qui se relaient mutuellement, en direction des stations hertziennes terrestres, égale à 75 km, et par conséquent un allongement de la durée de propagation pour le sens aller et le sens retour, égal à 0,5 ms.

Fig. 1

Fig. 2

Fig. 3

Fig. 4